# FASCICULE DE BREVET EUROPEEN

(11) **EP 2 804 793 B1**
(45) Date de publication et mention de la délivrance du brevet: **21.11.2018**
(21) Numéro de dépôt: 12808351.6
(22) Date de dépôt: 14.12.2012
(51) Int. Cl.: B60T 11/22, B60T 11/232, B60T 11/20

(54) **MAITRE-CYLINDRE AVEC SYSTEME DE LIMITATION DE FLUX.**
HAUPTZYLINDER MIT FLUSSBEGRENZUNGSSYSTEM
MASTER CYLINDER WITH FLOW LIMITATION SYSTEM

(30) Priorité: 15.12.2011 FR 1103907
(43) Date de publication de la demande: 26.11.2014
(73) Titulaire: Robert Bosch GmbH, 70442 Stuttgart (DE)
(72) Inventeur: LHUILLIER, Laurent, 93150 Le Blanc Mesnil (FR); RODRIGUEZ, Marc, Beverley Hills, MI 48025 (US)
(86) Numéro de dépôt international: PCT/EP2012/075618
(87) Numéro de publication internationale: WO 2013/087875

(56) Documents cités:
- DE-U1- 9 415 262
- US-A1- 2003 084 665

## Description

### Domaine de l'invention

L'invention se rapporte à un maître-cylindre équipé d'un réservoir de liquide de frein relié au maître-cylindre par son goulot engagé dans un perçage du dessus du maître-cylindre pour être en communication avec la chambre de pression à travers les trous du piston (piston primaire et/ou piston secondaire) lorsque celui-ci est au repos, par un perçage traversant la paroi du maître-cylindre.

### Etat de la technique

Les maîtres cylindres connus comportent un piston primaire et un piston secondaire généralement en aluminium et montés tous deux en série dans un alésage axial d'un corps de maître-cylindre de frein, généralement en aluminium usiné. De tels maîtres cylindres sont décrits dans le document FR 2 827 244. Une tige de poussée dans une cavité du piston primaire permet d'actionner le déplacement du piston primaire qui met sous pression une chambre de pression primaire, le piston secondaire mettant sous pression une chambre de pression secondaire. Des ressorts primaire et secondaire repoussent les pistons dans le sens inverse du déplacement assurant la montée en pression.

L'alésage du maître-cylindre est alimenté en liquide de frein par deux perçages d'alimentation raccordés au réservoir de liquide frein pour alimenter les chambres de pression primaire et secondaire. Ces perçages débouchent dans des chambres annulaires, des joints d'étanchéité annulaires appelés coupelles sont prévus par les pistons de part et d'autre des chambres annulaires.

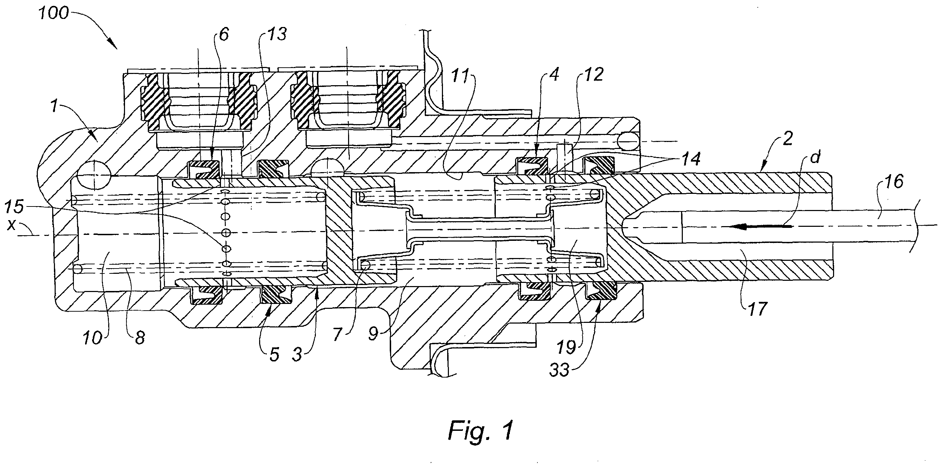

L'alimentation des chambres de pression, en liquide de frein se fait lorsque les pistons sont au repos dans la position représentée figure 1. L'alimentation se fait par des trous dans les parois des pistons qui font alors communiquer les perçages d'alimentation et les chambres annulaires avec l'intérieur des pistons primaire et secondaire donnant respectivement dans ces chambres par les trous dans les parois des pistons. L'axe de ces trous est généralement perpendiculaire à l'axe du piston. Lorsque les pistons avancent (sens de la flèche (d) sur la figure 1) les trous des pistons franchissent les joints d'étanchéité pour isoler les chambres d'alimentation et ainsi permettre l'établissement d'une pression de freinage dans les chambres de pression primaire et secondaire.

L'ensemble du maître-cylindre est monté sur un servomoteur d'assistance au freinage.

Lorsque les pistons sont déplacés selon le sens de la flèche (d) par la tige de poussée, la coupelle 4 isole la chambre de pression primaire du perçage d'accès d'alimentation primaire et la coupelle 6 isole la chambre de pression secondaire du perçage d'accès d'alimentation. Lorsque l'effort sur la tige de poussée est relâché, le volume de liquide de frein accumulé dans les freins et les ressorts du maître-cylindre repoussent les pistons en position repos. Il peut arriver, que lors d'un relâché rapide de la tige de poussée, le liquide de frein des chambres de pression du maître-cylindre passe sous la pression atmosphérique, à cause de l'action des ressorts qui repoussent les pistons plus vite que l'arrivée du liquide de frein dans le maître-cylindre. Au moment où les pistons arrivent en position repos, la communication entre le réservoir à la pression atmosphérique et les chambres du maître-cylindre s'ouvre de manière directe produisant alors un passage ou flux de liquide frein rapide et brutal qui génère du bruit dans le maître-cylindre, appelé « coup de bélier ».

Les bruits provoqués par le coup de bélier peuvent être plus ou moins atténués selon l'implantation sur le véhicule.

Selon le document US 2003/0084665, il est connu d'équiper un maître-cylindre d'un réservoir de liquide de frein d'un opercule formant une chicane limitant le débit de liquide allant du réservoir vers la chambre de pression du maître-cylindre. Cet opercule est logé dans le perçage au-dessus du maître-cylindre qui forme une chambre, partiellement fermée par le goulot du réservoir de liquide de frein. Cet opercule flottant est muni sur sa face inférieure de plots de façon que l'opercule ne puisse pas se coller par dépression contre le perçage débouchant dans le maître-cylindre et créer un effet de coup de bélier au moment d'un retour rapide du ou des pistons du maître-cylindre en position de repos.

Mais cet opercule a l'inconvénient de n'être qu'une demi-mesure au problème posé.

Il arrive en effet qu'au moment du montage, l'opérateur place mal l'opercule dans la chambre du maître-cylindre puisqu'il s'agit d'un choix essentiellement binaire et qu'en cas d'attention moyenne ou dans la rapidité d'exécution des gestes, l'opercule soit mis à l'envers. Dans ce cas, il fonctionne comme un opercule usuel et au moment de l'aspiration produite dans la chambre du maître-cylindre, le liquide ne peut arriver dans le maître-cylindre immédiatement, ce qui amplifie l'effet de coup de bélier au moment où effectivement l'opercule se décolle et que le liquide du réservoir peut arriver dans la chambre du maître-cylindre.

### But de l'invention

La présente invention a pour but de développer un moyen permettant de limiter les bruits dus à la circulation du liquide de frein dans un maître-cylindre et qui soit facilement adaptable en fonction de l'application sur le véhicule, sans modification des parties usinées du maître-cylindre et sans risque d'erreur de montage.

### Exposé et avantages de l'invention

A cet effet, l'invention a pour objet un maître-cylindre de frein du type défini ci-dessus, le perçage du dessus du maître-cylindre forme une chambre dont le dessus est partiellement fermé par le bord du goulot du réservoir et dont le fond communique avec le perçage, un opercule flottant logé libre en mouvement dans la chambre étant retenu à plat entre la butée haute formée par le dessus de la chambre et son fond, l'opercule flottant ayant des appuis sur sa face inférieure et sa face supérieure pour s'appuyer librement autour du perçage débouchant dans le fond, l'opercule formant une chicane limitant le débit de liquide du réservoir vers la chambre de pression. Cette pièce ainsi disposée permet de créer une chicane et de limiter la vitesse du liquide de frein pour diminuer ou supprimer les bruits du type coup de bélier. La conception d'un maître-cylindre est de plus en plus standardisée et en fonction de l'application d'un maître-cylindre sur un véhicule le phénomène de coup de bélier peut être plus ou moins ressenti par le conducteur du véhicule, aussi le fait de réaliser un maître-cylindre adapté est une solution simple et économique pour résoudre le problème du coup de bélier sans avoir à destandardiser la fabrication des maîtres-cylindres. Effectivement selon l'invention, lors d'un retour rapide des pistons du maître-cylindre, la pression des chambres de pression est inférieure à la pression atmosphérique ; ainsi, au moment où les pistons arrivent dans une position de repos, les passages en forme de trous des pistons passent les zones d'étanchéité formées par les coupelles qui permettent le passage entre le réservoir et les chambres de pression. L'opercule flottant dans le passage de liquide de frein entre le réservoir et le maître-cylindre crée une chicane qui ralentit le flux de liquide de frein et limite le bruit généré par le liquide de frein du réservoir arrivant dans la chambre de pression. Le coup de bélier est dû à la colonne de liquide qui descend brutalement du réservoir et vient buter sur les parois de la cavité intérieure du piston et des chambres de pression, lors du retour rapide des pistons dans la position repos. En fonction de l'importance du bruit, les dimensions de l'opercule flottant peuvent être adaptées pour résoudre le problème de bruit, mais sans dégrader les fonctions du maître-cylindre et notamment les fonctions de débit nécessaire au fonctionnement des systèmes du type ABS (anti blocage de roues) ou ESP (aide à la stabilité du véhicule). La variation de la hauteur des appuis et du diamètre de l'opercule flottant permet d'obtenir sans destandardisation du maître-cylindre, un compromis bruit/débit adapté aux exigences du client pour le bruit et aux exigences de fonctionnement des systèmes ABS et ESP pour les débits.

Comme l'opercule flottant est un disque muni d'appuis en forme de talons sur la face inférieure de sorte que même sous l'effet d'une forte dépression, l'opercule ne risque pas de se coller contre le perçage relié à la chambre de pression du maître-cylindre et interdire le remplissage.

L'opercule flottant étant en forme de disque muni d'appuis sur ses deux faces, l'installation de l'opercule flottant dans la ou les chambres du maître-cylindre ne nécessite pas de soins particuliers quant à l'orientation, l'opercule flottant ne risquant pas de se coller contre le fond de la chambre.

Selon les caractéristiques dimensionnelles de l'opercule flottant, de son épaisseur avec les appuis, de la hauteur de la chambre qui le reçoit et des dimensions de l'opercule quant à sa largeur ou longueur et des dimensions de la section de la chambre, l'opercule ne risque pas d'être retourné et de ne pas rester plus ou moins à plat pour créer réellement une chicane efficace entre l'entrée de la chambre à partir du réservoir et la sortie de la chambre dans le fond, communiquant avec le perçage allant vers la ou les chambres de pression du maître-cylindre.

Suivant une caractéristique, les appuis sont répartis régulièrement. Si la chambre a une section circulaire, il est avantageux que l'opercule soit lui-même une pièce en forme de disque circulaire de diamètre inférieur au diamètre de la section de la chambre mais supérieur au diamètre de l'embouchure du goulot du réservoir dans la chambre, diamètre qui est naturellement supérieur au diamètre du perçage débouchant dans le fond de la chambre.

L'opercule est avantageusement une pièce en matière plastique.

Suivant une autre caractéristique avantageuse, l'opercule flottant est constitué par une plaque munie de déformations constituant des appuis sur une face ou sur les deux face et notamment l'opercule flottant est une pièce dont au moins le bord est ondulé pour former des appuis.

### Dessins

Les différents objets et caractéristiques de l'invention apparaîtront plus clairement dans la description et dans les figures annexées qui représentent:
- la figure 1, est une vue en coupe axiale d'un maître-cylindre selon l'état de la technique,
- la figure 2A est une vue en coupe axiale du maître-cylindre selon l'état de la technique,
- la figure 2B est une vue en coupe axiale analogue à celle de la figure 2A du maître-cylindre muni de l'opercule flottant selon l'état de la technique,
- la figure 2C est une vue en coupe de l'opercule flottant selon l'invention,
- la figure 3A est une vue isométrique d'un opercule flottant en forme de pièce cylindrique,
- la figure 3B est une vue de dessus de l'opercule flottant de la figure 3A.

### Description de modes de réalisation de l'invention

La figure 1 montre un maître-cylindre de frein 100 avec un alésage 11 recevant un piston primaire 2, un piston secondaire 3 et des ressorts primaire 7 et secondaire 8. Les pistons 2, 3 ont pour rôle de mettre sous pression des chambres de pression primaire 9 et secondaire 10. Des perçages d'accès d'alimentation en liquide de frein 12, 13 sont destinés à être raccordés à un réservoir de liquide de frein (non représenté). De part et d'autre du perçage d'accès 12 sont prévues des coupelles 33, 4 et de part et d'autre du trou d'accès 13 sont prévues des coupelles 5, 6. Lorsque le maître-cylindre est au repos, le piston primaire 2 est dans la position représentée sur la figure 1. Les parois des pistons 2, 3 munies de passages 14, 15 font communiquer les perçages 12, 13 avec l'intérieur de chaque piston 2, 3 et la chambre de pression primaire 9 et la chambre de pression secondaire 8. Au repos, les coupelles 4, 6 permettent la communication entre les perçages d'accès 12, 13 et les chambres de pression primaire et secondaire 9, 10, qui sont ainsi alimentées en liquide de frein.

Sous l'effet d'une force de freinage exercée suivant le sens (d) par une tige de poussée 16 dans la cavité 17 du piston primaire 2, celui-ci se déplace selon le sens de la flèche (d) ; la coupelle 4 obture des passages 14 et la coupelle 6 obture les passages 15. Les chambres de pression primaire et secondaire 9, 10 étant isolées des perçages 12, 13, une pression s'établit dans les chambres 9, 10. Cette pression est proportionnelle à l'effort exercé suivant le sens (d) par la tige de poussée 16.

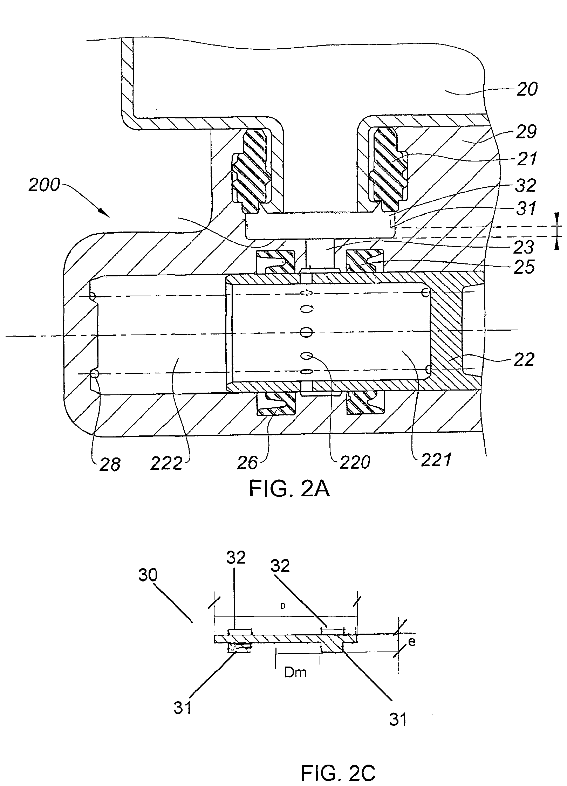

La figure 2A montre une partie d'un maître-cylindre 200 limitée à l'extrémité du maître-cylindre tandem coté piston secondaire 22 et chambre secondaire 222 sachant que les moyens de l'invention, représentés et écrits s'appliquent dans les mêmes conditions au piston primaire et à la chambre primaire et à sa communication avec le réservoir par l'embout et le perçage 12 apparaissant à la figure 1. Le maître-cylindre 200 est équipé d'un réservoir 20 relié au corps 29 du maître-cylindre 200 par interposition d'un manchon d'étanchéité 21 retenant le goulot 201 du réservoir du maître-cylindre qui peut être un maître-cylindre tandem.

Sous le goulot 201, le corps 29 forme une chambre 24 dont le dessus 241 est partiellement fermé par le bord du goulot 201 et le bord du manchon 21. Le fond 242 de la chambre 24 est muni du passage 23 réalisé dans la paroi du corps du maître-cylindre. Cette cavité 24 est destinée à recevoir un opercule flottant 30 en forme de disque de dimensions supérieures à celles de l'embouchure 202 du goulot 201 mais inférieures à celles de la section de la chambre 24 pour pouvoir bouger librement dans la chambre 24.

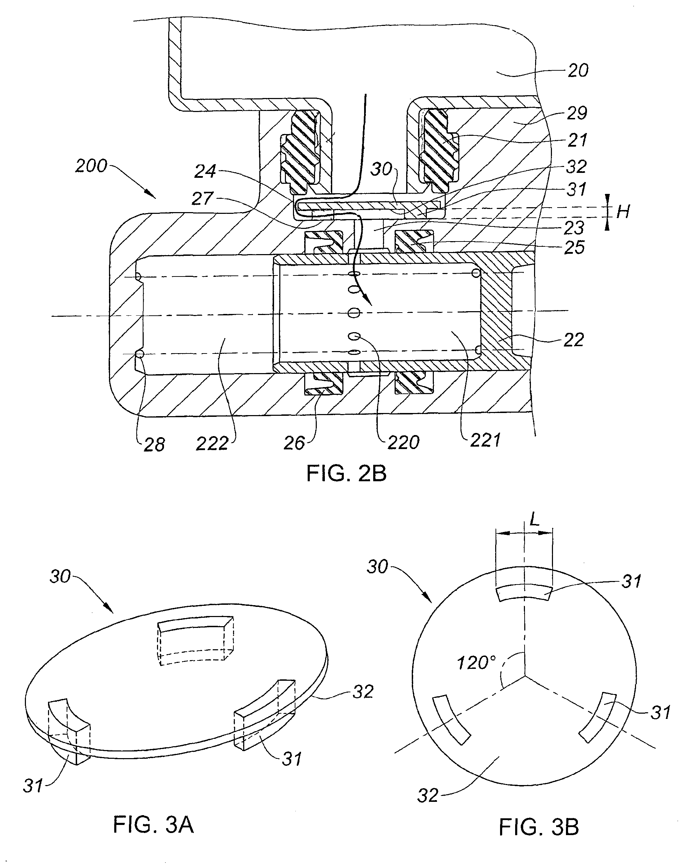

L'épaisseur (e) de cet opercule flottant 30 est inférieure à la hauteur h de la chambre 24. Cet opercule 30 placé dans la chambre 24 (figure 2B) constitue ainsi une chicane qui ralentit le débit (flux) de liquide de frein pompé par la dépression créée par le piston 22 à son retour vers sa position de repos.

La figure 2C est une vue en coupe de l'opercule flottant 30 selon l'invention destiné à la chambre 24 dans laquelle il se trouve comme représenté à la figure 2B.

La circulation du liquide de frein entre le réservoir 20 et la chambre 220 à travers la chambre 24, le passage 23 et les trous 220 est figuré par la flèche F. L'opercule 30 en forme de disque ou de pièce cylindrique mince n'obture jamais le passage 23 sous l'effet de la dépression car il comporte des éléments d'appui 31 pour s'appuyer contre le fond 242 autour de l'entrée 231 du passage 23 et sans risquer d'être plaqué contre le fond et d'obturer de manière hermétique le passage 23 sous l'effet de la dépression.

Selon la vue en coupe de la figure 2C, l'opercule 30 est en forme de disque circulaire de diamètre D inférieur au diamètre D_{M} de la chambre 24 et supérieur au diamètre Dₘ de l'entrée 231 du passage 23. Les éléments d'appui 31 sont des bossages ou des talons en saillie de la face inférieure de l'opercule 30. De façon avantageuse, le dessus de l'opercule est également muni de bossages 32 de façon à rendre la fonction de l'opercule 30 indépendante de la position de son montage dans l'interface réservoir 20/chambre 24 et éviter ainsi toute erreur de montage.

Les éléments d'appui 31, 32 et leur disposition sur l'opercule 30 ainsi que les dimensions relatives de l'opercule 30 (par exemple son diamètre dans le cas d'un opercule de forme circulaire) et la section de la chambre sont telles que quelque soit la position de l'opercule 30 dans la chambre 24, il ne risque pas de se coincer et d'obturer le passage 23.

Bien que de manière préférentielle pour des raisons de fabrication, l'opercule 30 soit un disque circulaire puisque la chambre 24 a une section circulaire, d'autres formes sont envisageables telles qu'une forme polygonale ou une forme en étoile.

Selon un mode de réalisation non représenté, l'opercule 30 est une surface de forme ondulée ou dont au moins le bord est ondulé ou déformé par rapport au plan de l'opercule et de préférence des deux côtés pour réaliser ainsi des appuis similaires aux talons ou bossages 31, 32 évitant le collage qui risquerait de boucher le passage 23.

L'opercule flottant 30 est avantageusement réalisé en matière plastique.

La mise en place de l'opercule flottant 30 dans la chambre 24 du circuit primaire ou du circuit secondaire alimenté par l'une ou l'autre des parties du maître-cylindre tandem se fait avant l'installation du réservoir 20 sur le maître-cylindre 200.

Si l'opercule 30 n'a d'appuis 31 que sur une face, il doit être mis en place de façon appropriée alors que si l'opercule 30 a des appuis 31, 32 sur les deux faces, aucune précaution particulière n'est nécessaire au montage.

La mise en place du réservoir emprisonne l'opercule flottant 30 dans la chambre 24 ; la section de l'opercule 30 et celle de la chambre ainsi que la hauteur libre (h) de la chambre évitent que l'opercule ne risque de se retourner si bien que l'opercule est toujours « à plat ».

Selon l'exemple représenté, l'opercule est une pièce cylindrique munie d'au moins trois plots 31 ; elle est disposée dans le passage de liquide de frein et placée entre le réservoir 20 et le maître-cylindre 200 et dans la cavité 24, les plots 31 s'appuyant sur le fond 27.

Le fond 27 est ouvert par le passage de liquide de frein 23 donnant dans la chambre annulaire délimitée par des coupelles 25 et 26 ; cette chambre annulaire est une portion d'un alésage du maître-cylindre où se trouve un piston 22 muni de trous 220 donnant dans la cavité 221 logeant un ressort 28 s'appuyant contre le fond de la cavité 221 et contre le fond le l'alésage du maître-cylindre, créant ainsi une chambre de pression 222. L'opercule flottant 30, ici en forme de pièce cylindrique, a pour fonction de limiter la vitesse de passage du liquide de frein entre le réservoir 20 et la chambre de pression 222 du maître-cylindre 200. Cette pièce 30 ainsi disposée permet de créer une chicane et de limiter la vitesse du liquide de frein pour diminuer ou supprimer les bruits de coup de bélier. Le fait de disposer cette pièce cylindrique munie dans ce cas de 3 plots, disposée dans le passage de liquide de frein et placée entre le réservoir et le maître-cylindre permet de créer une chicane qui ralentit le liquide frein. En fonction de l'importance du bruit, les dimensions de cette pièce cylindrique 30 peuvent être adaptées notamment par son diamètre et ou la hauteur (a) des plots. En modifiant le diamètre on définit la section de passage entre le diamètre de la cavité 24, le diamètre de la pièce cylindrique 30 ; la hauteur (a) des plots permet de définir une section de passage entre le fond 27 de la cavité 24 et la face 32 de la pièce cylindrique 30. Ces modifications de dimensions de l'opercule flottant ou pièce cylindrique 30 permettent d'adapter la géométrie de la chicane et résoudre le problème de bruit. La variation de la hauteur des plots et de diamètre de cette pièce permet donc d'obtenir sans déstandardisation du maître-cylindre, un compromis bruit/débit adapté aux exigences du client.

Les figures 3A et 3B montrent un exemple d'opercule en forme de pièce cylindrique 30 avantageusement en matière plastique. Une autre caractéristique avantageuse, est que la pièce cylindrique 30 possède au moins trois plots 31 répartis à 120 degrés.

L'opercule flottant 30 peut être placé dans le circuit primaire et/ou secondaire.

Bien que décrit ci-dessus dans l'application de l'opercule flottant 30 à la partie secondaire du maître-cylindre, un opercule de même type s'applique au circuit d'alimentation de la partie piston principal du maître-cylindre.

### NOMENCLATURE

- 1: corps
- 2: piston primaire
- 3: piston secondaire
- 4: coupelle
- 5: coupelle
- 6: coupelle
- 7: ressort
- 8: ressort
- 9: chambre de pression secondaire
- 10: chambre de pression primaire
- 11: alésage
- 12: perçage
- 13: perçage
- 14: rainures
- 15: trous
- 16: tige de poussée
- 17: cavité du piston primaire
- 18: coupelle
- 19: cavité avant
- 20: réservoir
- 21: manchon d'étanchéité
- 22: piston
- 23: passage
- 24: cavité
- 25: coupelle
- 26: coupelle
- 27: fond
- 28: ressort
- 29: corps
- 30: pièce cylindrique
- 31: plots
- 32: face inférieure
- 33: coupelle
- 220: passage
- 221: cavité de piston
- 222: chambre de pression

## Revendications

1. Maître-cylindre équipé d'un réservoir de liquide de frein (20) relié au maître-cylindre par son goulot (201) engagé dans un perçage du dessus du maître-cylindre pour être en communication avec la chambre de pression (222) à travers les trous (220) du piston (piston primaire et/ou piston secondaire) lorsque celui-ci est au repos, par un perçage (23) traversant la paroi du maître-cylindre (200),
- le perçage (23) du dessus du maître-cylindre forme une chambre (24) dont le dessus (241) est partiellement fermé par le bord du goulot (201) du réservoir (20) et dont le fond (242) communique avec le perçage (23),
- un opercule flottant (30) logé libre en mouvement dans la chambre (24) étant retenu à plat entre la butée haute formée par le dessus (241) de la chambre et son fond (242),
* l'opercule flottant (30) ayant des appuis (31) sur sa face inférieure pour s'appuyer librement autour du perçage (23) débouchant dans le fond (242),
- l'opercule flottant (30) formant une chicane limitant le débit de liquide du réservoir (20) vers la chambre de pression (222), étant un disque muni d'appuis (31) en forme de talon sur sa face inférieure,
**caractérisé en ce que**
- l'opercule flottant (30) est un disque muni d'appuis (31, 32) sur ses deux faces.

2. Maître-cylindre selon la revendication 1
**caractérisé en ce que**
les appuis (31, 32) sont répartis régulièrement.

3. Maître-cylindre selon la revendication 1
**caractérisé en ce que**
l'opercule flottant (30) est constitué par une plaque dont au moins le bord est déformé pour constituer des reliefs formant des appuis au moins par rapport à l'une des faces de la plaque.

4. Maître-cylindre selon la revendication 1
**caractérisé en ce que**
l'opercule flottant (30) est une pièce en matière plastique.

5. Maître-cylindre selon la revendication 1
**caractérisé en ce que**
le maître-cylindre est un maître-cylindre tandem ayant une chambre de pression primaire et une chambre de pression secondaire délimitées respectivement par un piston primaire et un piston secondaire et alimentées à partir du réservoir de liquide de frein par deux perçages (23, 12), reliés chacun à un goulot du réservoir à travers une chambre munie d'un opercule flottant (30).

## Patentansprüche

1. Hauptzylinder, der mit einem Bremsflüssigkeitsbehälter (20) ausgerüstet ist, der mit dem Hauptzylinder durch seinen Hals (201) verbunden ist, der von der Oberseite des Hauptzylinders in eine Bohrung eingesteckt ist, um mit der Druckkammer (222) durch die Löcher (220) des Kolbens (Primärkolben und/oder Sekundärkolben), wenn sich dieser in Ruhestellung befindet, durch eine Bohrung (23), die die Wand des Hauptzylinders (200) durchquert, in Verbindung zu stehen,
- die Bohrung (23) der Oberseite des Hauptzylinders bildet eine Kammer (24), deren Oberseite (241) teilweise durch den Rand des Halses (201) des Behälters (20) geschlossen ist und deren Boden (242) mit der Bohrung (23) kommunizierend verbunden ist,
- wobei ein schwimmender Deckel (30), der frei beweglich in der Kammer (24) untergebracht ist, flach zwischen dem oberen Anschlag, der von der Oberseite (241) der Kammer gebildet ist, und ihrem Boden (242) gehalten ist,
• wobei der schwimmende Deckel (30) Stützen (31) auf seiner unteren Seite aufweist, um frei um die Bohrung (23) herum, die in den Boden (242) mündet, gestützt zu werden,
- wobei der schwimmende Deckel (30), der ein Leitblech bildet, das den Flüssigkeitsdurchfluss des Behälters (20) in Richtung der Druckkammer (222) begrenzt, eine Scheibe ist, die mit Stützen (31) in Form eines Absatzes auf ihrer unteren Seite versehen ist,
**dadurch gekennzeichnet, dass**
- der schwimmende Deckel (30) eine Scheibe ist, die auf ihren zwei Seiten mit Stützen (31, 32) versehen ist.

2. Hauptzylinder nach Anspruch 1, **dadurch gekennzeichnet, dass** die Stützen (31, 32) gleichmäßig verteilt sind.

3. Hauptzylinder nach Anspruch 1, **dadurch gekennzeichnet, dass** der schwimmende Deckel (30) aus einer Platte gebildet ist, wovon mindestens der Rand verformt ist, um Reliefs zu bilden, die Stützen mindestens in Bezug auf eine der Seiten der Platte formen.

4. Hauptzylinder nach Anspruch 1, **dadurch gekennzeichnet, dass** der schwimmende Deckel (30) ein Kunststoffteil ist.

5. Hauptzylinder nach Anspruch 1, **dadurch gekennzeichnet, dass** der Hauptzylinder ein Tandem-Hauptzylinder ist, der eine Primärdruckkammer und eine Sekundärdruckkammer aufweist, die jeweils durch einen Primärkolben und einen Sekundärkolben begrenzt sind und aus dem Bremsflüssigkeitsbehälter durch zwei Bohrungen (23, 12) gespeist werden, die jeweils mit einem Hals des Behälters durch eine Kammer verbunden sind, die mit einem schwimmenden Deckel (30) versehen ist.

## Claims

1. Master cylinder fitted with a brake-fluid tank (20) linked to the master cylinder via the neck (201) thereof, which is engaged in a hole in the top of the master cylinder to communicate with the pressure chamber (222) via holes (220) in the piston (primary piston and/or secondary piston) when same is idle, via a hole (23) through the wall of the master cylinder (200),
- the hole (23) in the top of the master cylinder forms a chamber (24), of which the top (241) is partially closed by the edge of the neck (201) of the tank (20) and the bottom (242) communicates with the hole (23),
- a floating operculum (30) seated freely in movement in the chamber (24) being held flat between the top stop formed by the top (241) of the chamber and the bottom (242) of same,
* the floating operculum (30) having supports (31) on the lower face thereof that are designed to bear freely about the hole (23) opening out onto the bottom (242),
- the floating operculum (30) forming a chicane that limits the flow rate of fluid from the tank (20) to the pressure chamber (222) being a disk provided with heel-shaped supports (31) on the lower face thereof,
**characterized in that**
- the floating operculum (30) is a disk provided with supports (31, 32) on both faces thereof.

2. Master cylinder according to Claim 1
**characterized in that**
the supports (31, 32) are distributed regularly.

3. Master cylinder according to Claim 1
**characterized in that**
the floating operculum (30) is a plate in which at least the edge is deformed to form reliefs forming supports at least on one of the faces of the plate.

4. Master cylinder according to Claim 1
**characterized in that**
the floating operculum (30) is a plastic component.

5. Master cylinder according to Claim 1
**characterized in that**
the master cylinder is a tandem master cylinder with a primary pressure chamber and a secondary pressure chamber delimited respectively by a primary piston and a secondary piston, both being fed from the brake-fluid tank via two holes (23, 12), each of which is connected to a neck of the tank via a chamber fitted with a floating operculum (30).
